# EUROPEAN PATENT SPECIFICATION

(11) **EP 2 905 359 B1**
(45) Date of publication and mention of the grant of the patent: **14.06.2017**
(21) Application number: 13844091.2
(22) Date of filing: 02.08.2013
(51) Int. Cl.: C25B 1/04, C25B 15/02, F01B 23/10, C01B 3/26, H01M 8/00, H01M 8/06, H01M 8/10, H01M 8/12, H01M 8/0656, H01M 10/46, H01M 8/04082

(54) **RENEWABLE ENERGY STORAGE SYSTEM**
SPEICHERSYSTEM FÜR ERNEUERBARE ENERGIE
SYSTÈME DE STOCKAGE D'ÉNERGIE RENOUVELABLE

(30) Priority: 05.10.2012 JP 2012222644
(43) Date of publication of application: 12.08.2015
(73) Proprietor: Hitachi, Ltd., Tokyo 100-8280 (JP)
(72) Inventor: NAITO Hiroto, Tokyo 100-8280 (JP); SUGIMASA Masatoshi, Tokyo 100-8280 (JP)
(74) Representative: Beetz & Partner mbB
(86) International application number: PCT/JP2013/071001
(87) International publication number: WO 2014/054336

(56) References cited:
- WO-A1-2012/073383
- JP-A- 2002 371 396
- JP-A- 2003 040 601
- JP-A- 2005 255 505
- JP-A- 2007 269 522
- JP-A- 2008 011 614

## Description

The present application claims priority from Japanese application JP 2012-222644 filed on October 5, 2012.

### TECHNICAL FIELD

The present invention relates to a system that stores renewable energy as a liquid fuel.

### BACKGROUND ART

A large volume consumption of fossil fuel continues and, for example, global warming due to carbon dioxide etc. or air pollution etc. in urban areas become more acute. Under the above circumstances, hydrogen is taken notice of as an energy source for the next generation in place of fossil fuel. By using renewable energy as represented in a solar battery, wind power, and the like, for example, hydrogen can be produced by electrolysis, and further only water is generated by burning hydrogen. Accordingly, hydrogen is a clean energy source with a small amount of discharge of environmental pollutants associated with production and usage.

Hydrogen produced by the electrolysis can be stored as hydrogen energy by using an organic hydride system using hydrocarbon such as cyclohexane and decalin. An organic hydride is a liquid at room temperature and atmospheric pressure, and therefore can be easily stored and transported as compared to a case of a gas. For example, benzene and cyclohexane are cyclic hydrocarbon having the same number of carbon atoms. Further, as compared to the fact that benzene is unsaturated hydrocarbon having double bonds, cyclohexane is saturated hydrocarbon having no double bond. That is, hydrogen is added to benzene being the unsaturated hydrocarbon, and thereby cyclohexane being the saturated hydrocarbon is obtained. On the other hand, hydrogen is eliminated from the cyclohexane, and thereby benzene is obtained. As described above, by using a hydrogenation reaction and a hydrogen elimination reaction using benzene and cyclohexane, hydrogen can be stored or supplied. As described above, it is characterized that a hydrogen storage using the organic hydride system is excellent in safety, transportability, and storage capability.

Meanwhile, it is known that electrolysis efficiency of an electrolytic device depends on a temperature, and it is preferable that electrolysis is performed while the electrolytic device is maintained in a favorable temperature state. On the other hand, in Patent Literature 1, it is proposed that hot water is generated concurrently with cooling of a solar battery panel, the hot water is similarly supplied to an electrolysis vessel that is integrated into the battery panel, and a temperature thereof is maintained at a temperature better adapted to the electrolysis; and thereby the electrolysis efficiency is increased and an improvement in efficiency of solar power generation is also attained.

### CITATION LIST

### PATENT LITERATURE

PATENT LITERATURE 1: JP-A-2000-54174
PATENT LITERATURE 2: WO 2012/073383 A1
PATENT LITERATURE 3: JP-A-2002-371396
PATENT LITERATURE 4: JP-A-2003-040601

### SUMMARY OF INVENTION

### TECHNICAL PROBLEM

In a system described in Patent Literature 1, a system is assumed that produces hydrogen by a water electrolytic device by using power generated by a solar power generation device, and solar heat is mainly used as a heat source for generating a hot water. When solar heat is used as a heat source, an amount of heat to be supplied is constrained depending on a time zone of daytime or nighttime, weather conditions, or the like. Therefore, it is difficult to apply the solar heat to a system that uses other renewable energy such as wind power generation. Further, in Patent Literature 1, it is proposed that exhaust heat from an engine or a fuel battery is also used collectively other than the solar heat as a heat source for generating a hot water. However, even when the engine or fuel battery is used as a heat source, a heat supply amount thereof is constrained depending on operational situations. On the contrary, it is feared that when the heat source is operated in preference to a heat supply to the water electrolytic device, reduction in efficiency of the system is caused as a whole.

Further, when the temperature of a hydrogeneration reactor is low, the efficiency of the hydrogenation reaction may be low and the hydrogen and unsaturated hydrocarbon supplied to the reactor may be exhausted without a reaction therebetween.

Patent literature 2 discloses a natural energy storage system having an electrical power generation means, an electrical storage means, a hydrogen production means, a hydrogenation means, an unsaturated hydrocarbon storage means, a saturated hydrocarbon storage means and an unsaturated hydrocarbon supply control means. This control means is said to enable storage and supply of natural energy with high efficiency while taking variation in the amount of renewable energy into account.

Patent literature 3 discloses an electrolytic device suitable for generating hydrogen by electrolysis of water in which a controller controls a current adjustment mechanism, a liquid feed mechanism and a temperature adjustment mechanism to provide low cost and stable generation of hydrogen in accordance with a predetermined variation in electrical supply costs. The temperature adjustment mechanism comprises a cold flow heat exchanger providing that the liquid supplied to the electrolysis cell is kept within an appropriate temperature range.

Patent literature 4 discloses a method for the supply of hydrogen based upon the conveyance of its hydrogenation product with an aromatic compound. The heat generated by the hydrogenation is converted into electrical or mechanical energy by, for example, a Kalina Cycle unit.

To solve the above problems, it is an object of the present invention to provide a renewable energy storage system capable of storing renewable energy with high efficiency.

### SOLUTION TO PROBLEM

As a result of a thorough investigation to solve the problems described above, in a renewable energy storage system that produces hydrogen by a water electrolytic device by using power into which renewable energy is converted, and stores energy as saturated hydrocarbon (hydrogen storage medium) obtained by reacting the produced hydrogen and unsaturated hydrocarbon, the present inventors have found that, by supplying reaction heat to the water electrolytic device at the time of adding the hydrogen to the unsaturated hydrocarbon, the system can be provided which performs temperature control of the stable water electrolytic device and stores renewable energy with high energy efficiency through an improvement in electrolysis efficiency of the water electrolytic device, thereby accomplishing the present invention.

Further, the present inventors have found that a piping connected to an unsaturated hydrocarbon tank via a gas liquid separation tank and a valve provided on piping connecting the gas liquid separation tank and a saturated hydrocarbon tank enables unsaturated hydrocarbon that has not reacted as described above to be recovered to the unsaturated hydrocarbon storage unit.

### ADVANTAGEOUS EFFECTS OF INVENTION

According to the present invention, a renewable energy storage system capable of storing renewable energy with high efficiency can be provided.

Other objects, features and advantages of the invention will become apparent from the following description of the embodiments of the invention taken in conjunction with the accompanying drawings.

### BRIEF DESCRIPTION OF DRAWINGS

FIG. 1 is a diagram schematically illustrating a configuration of a renewable energy storage system according to a first embodiment of the present invention;
FIG. 2 is a diagram schematically illustrating a configuration of a renewable energy storage system according to a second embodiment of the present invention; and
FIG. 3 is a diagram schematically illustrating a configuration of a renewable energy storage system according to a third embodiment of the present invention.

### DESCRIPTION OF EMBODIMENTS

Hereinafter, specific examples of a renewable energy storage system according to the present embodiment will be arbitrarily described with reference to the accompanying drawings.

### [1. First Embodiment]

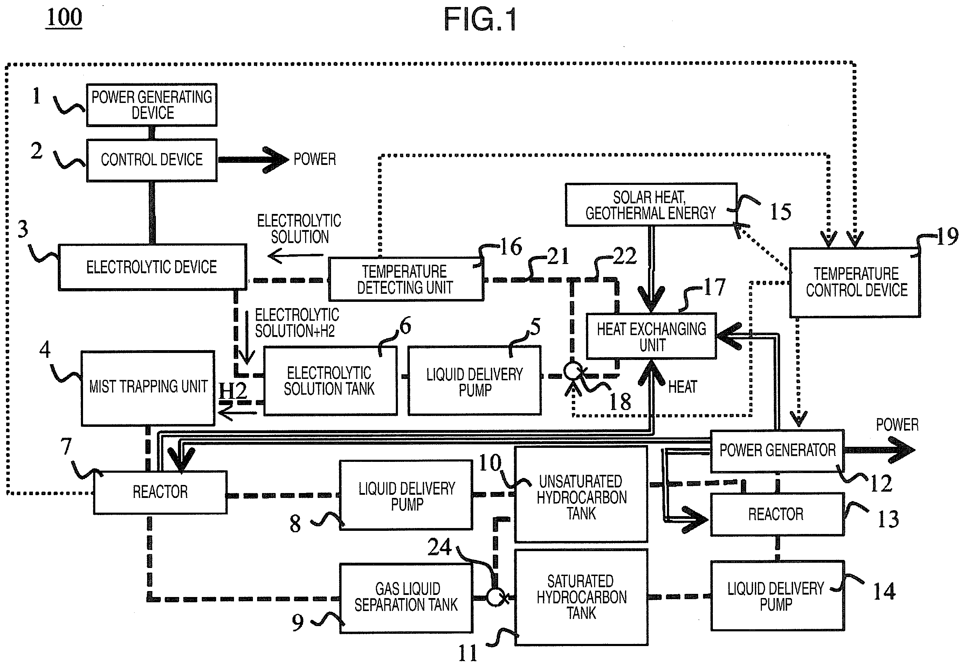

FIG. 1 is a diagram schematically illustrating a configuration of the renewable energy storage system according to a first embodiment of the present invention. In FIG. 1, a solid line, a broken line, and a double line represent electrical wiring, fuel energy (for example, hydrogen, methylcyclohexane, or the like), and heat energy, respectively. Each line is wiring connecting both respective devices and represents transmission and reception of signals and energy.

As illustrated in FIG. 1, the renewable energy storage system 100 according to the first embodiment stores renewable energy. Further, the renewable energy storage system 100 is configured by including at least a power generating device 1 that serves as a renewable energy power generating device, a control device 2 that controls generated power, an electrolytic device 3 that serves as a hydrogen production device, a mist trapping unit 4 that performs high purification and gas liquid separation of a hydrogen gas, a liquid delivery pump 5 that cyclically supplies an electrolytic solution to the electrolytic device 3, an electrolytic solution tank 6 that stores the electrolytic solution and performs gas liquid separation for removing air bubbles in the solution, a reactor 7 that serves as a hydrogeneration device, a liquid delivery pump 8 that supplies unsaturated hydrocarbon to the reactor, a gas liquid separation tank 9, an unsaturated hydrocarbon tank 10 that serves as an unsaturated hydrocarbon storage unit, a saturated hydrocarbon tank 11 that serves as a saturated hydrocarbon storage unit, a heat exchanging unit 17 for heating the electrolytic solution, a liquid-temperature detecting unit 16 that detects a temperature of the electrolytic solution, and various types of detectors. The renewable energy storage system 100 is configured so that heat generated by the reactor 7 is supplied at least to the heat exchanging unit 17.

Further, a regenerating device is provided that at least includes the reactor 13 that generates hydrogen and unsaturated hydrocarbon through a dehydrogenating reaction of saturated hydrocarbon supplied from the saturated hydrocarbon tank 11 by the liquid delivery pump 14 and a power generator that generates power by using the hydrogen generated by the reactor 13, and thereby the renewable energy storage system 100 can regenerate, as power and heat, energy stored as saturated hydrocarbon. In addition, in the renewable energy storage system of the present embodiment, the regenerating device is not necessarily provided. For example, the saturated hydrocarbon tank 11 in which saturated hydrocarbon is stored can be transported, and power and heat can be supplied by the regenerating device provided at another site.

The renewable energy represents renewable energy such as solar light, wind power, geothermal energy, and water power. Further, in the renewable energy, electrical or physical connection lines, piping, or the like to the power generating device 1 do not exist and the renewable energy is based on global weather conditions. Specifically, when the renewable energy is, for example, solar light, the power generating device 1 to be hereinafter described is, for example, a solar battery, a solar power generation system, or the like.

The power generating device 1 converts to power the renewable energy such as solar light, wind power, or the like. The power generating device 1 is connected electrically to the electrolytic device 3 and a system via the control device 2, and power generated by the power generating device 1 can be supplied to the electrolytic device 3 and the system.

When the control device 2 controls each power amount in accordance with a power generation amount of the renewable energy power generating device 1, electric characteristics of the electrolytic device 3, and a charging status of a power storage device, it is not particularly limited. Further, the control device 2 transmits and receives a signal for switching a connection mode of the electrolytic device 3 to a series-parallel connection.

The electrolytic device 3 produces at least hydrogen by electrolyzing an electrolytic solution by using power obtained by the power generating device 1. Accordingly, as power is more supplied to the electrolytic device 3 from the power generating device 1, the amount of hydrogen is also produced more in the electrolytic device 3. The electrolytic device 3 is connected electrically to the power generating device 1 via the control device, and connected to the electrolytic solution tank 6 through gas piping.

A specific configuration of the electrolytic device 3 is not particularly limited. Further, the electrolytic device 3 has, for example, an electrolytic solution, electrolyte, an electrode catalyst for promoting a reaction provided so as to sandwich the electrolyte, and an electrolytic cell holding a collector etc. that supply external power. Further, water is electrolyzed, and hydrogen and oxygen are generated by this electrode catalyst. In the present invention, the electrolytic cell or an electrolysis stack in which the electrolytic cells are stacked into multilayers is defined as the electrolytic device 3.

As the electrolytic device 3, an electrolytic device is preferable that is capable of performing electrolysis at a relatively low temperature and capable of start-up in a short time by using a solid high-polymer water electrolysis or alkaline water electrolysis. An electrolytic device using the solid high-polymer water electrolysis electrolyzes purified water by using solid polymer electrolyte having proton conductivity as a barrier plate or electrolyte, and further can efficiently produce high-purity hydrogen. An electrolytic device using the alkaline water electrolysis produces hydrogen by electrolyzing an alkaline aqueous solution by using as electrolyte a compound indicating alkaline at the time of dissolving the compound in water of potassium hydroxide etc.

In electrolysis efficiency of water, as a temperature becomes higher, efficiency is higher. Further, the electrolysis efficiency is highest at approximately 80 to 90°C in a solid high-polymer water electrolysis type or at approximately 120 to 150°C in alkaline water electrolysis type. By the heat exchanging unit 17 to be hereinafter described in the renewable energy storage system of the present embodiment, a temperature of the electrolytic solution is controlled so as to be a suitable temperature.

The electrolytic solution is stored in the electrolytic solution tank 6, the electrolytic solution in the electrolytic solution tank 6 is supplied to the electrolytic device 3 by the liquid delivery pump 5, and the electrolytic solution containing hydrogen exhausted from the electrolytic device 3 is returned to the electrolytic solution tank 6. The electrolytic solution tank 6 has a function of separating a hydrogen gas from the electrolytic solution exhausted from the electrolytic device 3 in addition to storage of the electrolytic solution. The hydrogen separated by the electrolytic solution tank 6 is supplied to the reactor 7 (to be hereinafter described) via the mist trapping unit 4 connected through the gas piping. The mist trapping unit 4 is a gas-liquid separation device, and is a unit for removing from the hydrogen gas the electrolytic solution that is present as a mist while being not sufficiently separated by the electrolytic solution tank 6. Examples of the mist trapping unit 4 include gas liquid separation due to cooling, a hydrogen separation membrane, and the like. Further, a hydrogen gas may be separated, and the mist trapping unit 4 is not limited thereto. In addition, a gas-liquid separation function of the mist trapping unit 4 may be imparted to the electrolytic solution tank 6, or even if the hydrogen gas separated by the electrolytic solution tank 6 contains mist, when an influence is not exerted on the reactor 7, the mist trapping unit 4 may be saved.

The reactor 7 is a hydrogeneration device that adds the hydrogen produced by the electrolytic device 3 to unsaturated hydrocarbon. The reactor 7 is connected to the mist trapping unit 4 through the gas piping as described above. In addition, the reactor 7 is connected to the saturated hydrocarbon tank 11 and the unsaturated hydrocarbon tank 10 (any tanks are described hereinafter) through liquid piping. Accordingly, the unsaturated hydrocarbon is supplied to the reactor 7 from the unsaturated hydrocarbon tank 10.

Specific kinds of the unsaturated hydrocarbon used in the reactor 7 are not particularly limited. For example, an aromatic compound being a liquid at a room temperature, such as methylbenzene, can be preferably used. For example, when methylbenzene is used as the unsaturated hydrocarbon, obtained saturated hydrocarbon is methylcyclohexane and a substance amount of hydrogen molecule capable of being stored to 1 mol methylbenzene is 2.5 mol. However, for example, anthracene, phenanthrene, or the like may be a liquid depending on conditions at the time of addition reaction. Therefore, when the addition reaction is performed under such conditions, the above aromatic compounds may be used. The aromatic compounds are used, and thereby more hydrogen can be further stored.

The above aromatic compound has advantages in which storage is easily performed because it is a liquid at a room temperature, and further a reactive interface becomes large at the time of performing a hydrogenation reaction. Further, the substance amount of hydrogen capable of being added to one molecule of the aromatic compound can be increased by using the aromatic compound, and more hydrogen can be stored by the amount of less unsaturated hydrocarbon. Further, unsaturated hydrocarbon may be used in one kind, or may be used in two or more kinds in an arbitrary ratio and combination.

In the reactor 7, a specific method for adding hydrogen to unsaturated hydrocarbon is not particularly limited. Note, however, that it is from the viewpoint of low cost and a short reaction time that hydrogen is normally added to unsaturated hydrocarbon by using a catalyst. Examples of the above catalyst include metals such as Ni, Pd, Pt, Rh, Ir, Re, Ru, Mo, W, V, Os, Cr, Co, and Fe, and alloys thereof. Metals constituting the catalyst and alloys thereof may be used in one kind alone, or may be used in two or more kinds in an arbitrary ratio and combination.

Further, it is preferable from the viewpoint of further low cost due to reduction in the catalyst amount and enlargement of a reaction surface area that these catalysts are converted into fine particles. When the catalysts that are converted into the fine particles are used, it may be supported to an arbitrary support from the viewpoint of preventing reduction in a surface area due to aggregation of a fine particle catalyst. When the catalyst is supported to the support, a supporting method is not particularly limited. For example, a coprecipitation method, a thermal decomposition method, an electroless plating method, or the like can be used. Also, a kind of the support is not particularly limited, and alumina-silicate such as silica, alumina, and zeolite can be used in addition to carbon materials such as activated carbon, carbon nanotube, and black lead. The support may be used in one kind, or may be used in two or more kinds in an arbitrary ratio and combination.

As described above, the hydrogen can be added to the unsaturated hydrocarbon, and saturated hydrocarbon is obtained. The obtained saturated hydrocarbon (so-called organic hydride) is stored in the saturated hydrocarbon tank 11 (to be hereinafter described).

Here, the hydrogenation reaction to the unsaturated hydrocarbon in the reactor 7 is an exothermic reaction. For example, when methylbenzene is used as the unsaturated hydrocarbon, a reaction temperature is approximately 200°C. In the renewable energy storage system of the present embodiment, heat generated by the hydrogenation reaction in the reactor 7 via the heat exchanging unit 17 is supplied to the electrolytic solution, and thereby the electrolysis efficiency in the electrolytic device 3 is improved.

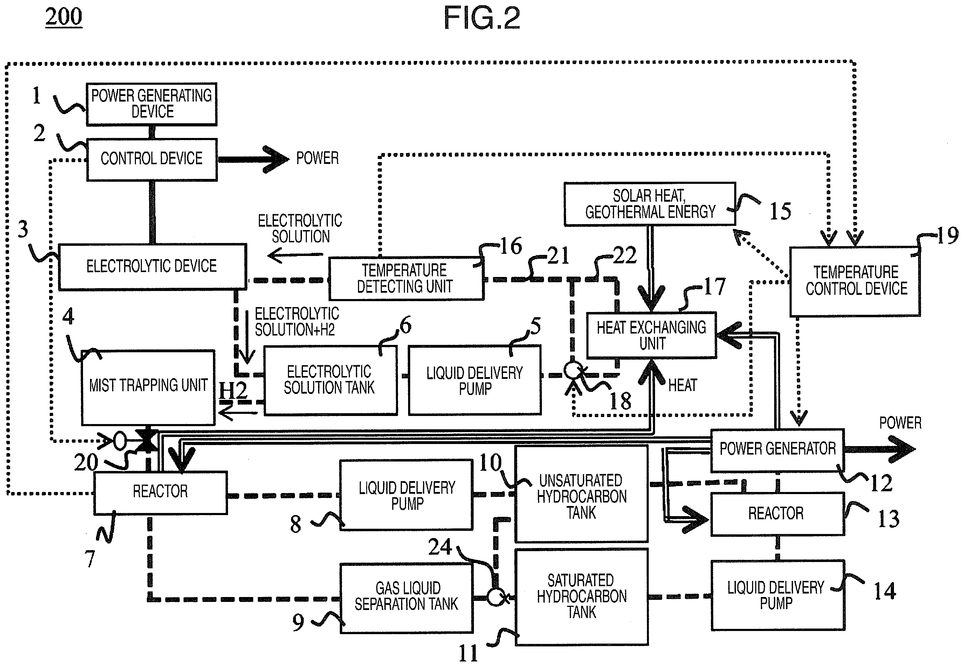

The heat exchanging unit 17 efficiently moves heat to an object at a low temperature from an object at a high temperature. For example, the piping through which the electrolytic solution flows is arranged at an outer circumferential unit of the reactor 7, and thereby heat on the reactor 7 can be supplied to the electrolytic solution through the piping, and the piping serves as the heat exchanging unit. Alternatively, the heat on the reactor 7 can be supplied to the electrolytic solution by using as a heating medium a fluid such as liquid or gas, and the heating medium and the piping through which the heating medium is made to flow serve as the heat exchanging unit. In addition to heat energy from the reactor 7, surplus heat of the power generator 12, the reactor 13, or the like and surplus heat of an external heat source 15 such as solar heat and geothermal energy as illustrated in FIGS. 1 and 2 can be supplied to the heat exchanging unit 17. As described above, when heat energy is supplied from a plurality of heat sources, it may be supplied to the electrolytic solution and the heat exchanging unit 17 may be the same or may be provided in plurality.

Specifications of the liquid delivery pump 5 are determined on the basis of characteristics of the electrolytic solution, a supply flow rate to the electrolytic device, and the like, and the liquid delivery pump 5 is connected to the electrolytic solution tank 6, the heat exchanging unit 17, the electrolytic device 3, and the temperature detecting unit 16 through the piping.

The temperature detecting unit 16 detects a temperature of the electrolytic solution and gives information to the control device, and a mode and specifications thereof are not particularly limited.

A temperature control device 19 receives a temperature signal from the solar heat and the geothermal energy 15, the power generator 12, the reactor 7, the heat exchanging unit 17, or the temperature detecting unit 16, and performs control for maintaining a temperature of the electrolytic solution at a predetermined temperature.

The saturated hydrocarbon generated by adding hydrogen is stored in the saturated hydrocarbon tank 11. Further, the saturated hydrocarbon that is stored in the saturated hydrocarbon tank 11 is sent to the reactor 13 for a regeneration reaction by the liquid delivery pump 14 while being in the state of the generated liquid to which the hydrogen is added, and the saturated hydrocarbon is separated into the hydrogen gas and the unsaturated hydrocarbon. The separated hydrogen is used as a fuel etc. For example, the hydrogen can be used by the power generator 12 or the like and power can be supplied. In addition, the unsaturated hydrocarbon generated by separating the hydrogen is stored in the unsaturated hydrocarbon tank 10 again.

The saturated hydrocarbon tank 11 stores the saturated hydrocarbon generated in the reactor 7. Accordingly, the saturated hydrocarbon tank 11 is connected to the reactor 7 through the liquid piping. Further, between the saturated hydrocarbon tank 11 and the reactor 7, for example, a flow rate adjusting valve, a flowmeter, or the like for controlling an amount supplied to the saturated hydrocarbon tank 11 of the saturated hydrocarbon may be provided.

The unsaturated hydrocarbon tank 10 stores the unsaturated hydrocarbon to be supplied to the reactor 7. The unsaturated hydrocarbon tank 10 is connected to the reactor 7 through the liquid piping. Further, for example, the flow rate adjusting valve, the flowmeter, or the like for controlling the amount supplied to the reactor 7 from the unsaturated hydrocarbon tank 11 may be provided.

The reactor 13 used in the regenerating device is a dehydrogenating reactor that separates the stored saturated hydrocarbon into hydrogen and unsaturated hydrocarbon through the dehydrogenating reaction. The dehydrogenating reaction is a reverse reaction of the hydrogenation reaction, and is performed by using catalysts. The reactor 13 having the same configuration as that of the reactor 7 can be used.

The power generator 12 of the regenerating device is a device that generates power and heat by using as a power generating fuel the hydrogen generated by the reactor 13. As the power generator 12, for example, an engine generator, a turbine generator, or the like can be used in which a power generator is connected to a power shaft of power generated by a solid polymer fuel cell, an oxide fuel cell, or an internal combustion engine. Further, in the power generator 12, generating efficiency can be improved by supplying high-purity oxygen generated by the electrolytic device 3. Further, as the power generating fuel, other power generating fuels can be mixed into the hydrogen generated by the reactor 13 to be used.

### <Operation>

Next, operations of each device at the time of storing renewable energy by the renewable energy storage system 100 will be described with reference to FIG. 1.

First, renewable energy such as solar light is used, and the power generating device 1 (for example, a solar battery or the like) generates power. The generated power is supplied to the electrolytic device 3 via the control device 2. In accordance with the generated power and the electric characteristics of the electrolytic device 3, the electrolytic device 3 starts electrolysis and generates hydrogen in response to the supplied generated power while an electric connection configuration of a serial number and/or a parallel number of the electrolytic device 3 is switched. The hydrogen generated by the electrolytic device 3 is highly-purified by the electrolytic solution tank 6 and the mist trapping unit 4, and is sent to the reactor 7. To the reactor 7, the unsaturated hydrocarbon is supplied together with hydrogen by the liquid delivery pump 8 from the unsaturated hydrocarbon tank 10, and saturated hydrocarbon is generated through a reaction between the hydrogen and the unsaturated hydrocarbon. The saturated hydrocarbon generated by the reactor 7 is sent to the saturated hydrocarbon tank 11 and stored as energy.

Here, when a temperature of the reactor 7 is low at the beginning of the start of the reactor 7 or the like, efficiency of the hydrogenation reaction may be low, and the hydrogen and the unsaturated hydrocarbon supplied to the reactor 7 may be directly exhausted without a reaction therebetween. In this case, piping is provided that is connected to the unsaturated hydrocarbon tank 10 via the gas liquid separation tank 9 and a valve 24 provided on the piping that connects the gas liquid separation tank 9 and the saturated hydrocarbon tank 11 as illustrated in FIG. 1. Thus, unreacted unsaturated hydrocarbon can be recovered to the unsaturated hydrocarbon tank 10. Specifically, when the temperature of the reactor 7 is low, the valve 24 is controlled so as to connect the gas liquid separation tank 9 and the unsaturated hydrocarbon tank 10. Further, the hydrogen and the unsaturated hydrocarbon are separated by the gas liquid separation tank 9, and the separated unsaturated hydrocarbon is returned to the unsaturated hydrocarbon tank 10 from the piping. Thereafter, at the time when the temperature of the reactor 7 is higher than a predetermined temperature, the valve 24 may be controlled so as to connect the gas liquid separation tank 9 and the saturated hydrocarbon tank 11. In addition, as measures in the case in which the temperature of the reactor 7 is low, surplus heat of the power generator 12 or the like may be supplied to the reactor 7 and the reactor 7 may be heated in addition to a method for providing the gas liquid separation tank 9, the valve 24, or the like. By the above operations, renewable energy can be stored.

Energy stored as the saturated hydrocarbon can be regenerated as power and heat energy by the regenerating device. The saturated hydrocarbon stored in the saturated hydrocarbon tank 11 is sent to the reactor 13 by the liquid delivery pump 14 in response to a power demand. In the reactor 13, hydrogen and unsaturated hydrocarbon are generated through the dehydrogenating reaction of the saturated hydrocarbon. The hydrogen generated by the reactor 13 is supplied to the power generator 12. Further, power is generated by the power generator 12, and thereby power and heat are produced and supplied to the outside. The dehydrogenating reaction by the reactor 13 is an endothermic reaction in contradiction to the hydrogenation reaction. Exhaust heat of the power generator 12 is effectively used, and heat energy necessary for the dehydrogenating reaction by the reactor 13 is supplied. Thus, hydrogen can be efficiently produced.

Next, a method for controlling a temperature of the electrolytic solution supplied to the electrolytic device 3 will be described. To the electrolytic device 3, the electrolytic solution is supplied from the electrolytic solution tank 6 in response to a flow rate determined by the liquid delivery pump 5. On this occasion, in an electrolytic solution supply line 21 that cyclically supplies the electrolytic solution of the electrolytic solution tank 6 to the hydrogen production device 3, a heat exchanging line 22 that is branched from the electrolytic solution supply line 21 and is returned to the electrolytic solution supply line via the heat exchanging unit 17, and a valve 18 for adjusting the flow rate of the electrolytic solution flowing through the electrolytic solution supply line 21 and the heat exchanging line 22 are provided. Further, the temperature detecting unit 16 that detects a liquid temperature of the electrolytic solution is provided on the electrolytic solution supply line 21. To the temperature control device 19, a detection signal of the temperature detecting unit 16 and data about a heat amount supplied to the heat exchanging unit from the reactor 7 are input. Further, the temperature control device 19 controls the valve 18 to adjust the flow rate of the electrolytic solution flowing through the heat exchanging line 22 from the electrolytic solution supply line 21 so that a liquid temperature of the electrolytic solution is in a predetermined temperature range. Through the above temperature control, the liquid temperature of the electrolytic solution can be controlled to a temperature at which the electrolysis efficiency is high. Further, the reactor 7 produces saturated hydrocarbon by using the hydrogen generated by the electrolytic device 3, and the electrolytic device 3 and the reactor 7 are driven by a set. Therefore, heat energy generated through the hydrogenation reaction of the reactor 7 is used, and thereby heat necessary for the electrolytic device 3 can be stably supplied.

When the heat energy supplied from the reactor 7 at the beginning of the start or the like of the reactor 7 is short, surplus heat of the power generator 12, the reactor 13, or the like and surplus heat of an external heat source 15 such as the solar heat and the geothermal energy as illustrated in FIG. 1 can be supplied. Further, the above surplus heat can be used as a heat source for heat insulation of the electrolytic solution, if necessary.

An environment in which a series of the operations is performed is not particularly limited. Further, when the problems can be solved, the operations can be performed in an arbitrary environment. Further, all the devices are not necessarily installed in the same area or the same site. Further, can be arbitrarily installed, for example, the electrolytic device 3 is installed inside the room, the reactor 7 is installed outside the room, only saturated hydrocarbon is taken out from the saturated hydrocarbon tank 11 and transported, and power is supplied via the reactor 13 and the power generator 12 in another area.

### <Summary>

As described above, according to the renewable energy system 100 according to the first embodiment, a change in the supply amount of the renewable energy is coped with, and at the same time, addition efficiency of hydrogen to unsaturated hydrocarbon can be improved. Therefore, the renewable energy can be stored without loss. Further, the stored renewable energy is converted into hydrogen and is stably stored as a compound containing the hydrogen, and therefore the compound can be freely used at any time, if necessary.

### [2. Second Embodiment]

Next, a renewable energy storage system 200 according to a second embodiment will be described with reference to FIG. 2. In addition, a device to which the same reference numeral as that of FIG. 1 is given in FIG. 2 represents the same device, and detailed descriptions will be omitted.

The renewable energy storage system 200 illustrated in FIG. 2 is obtained by adding a pressure adjusting device 20 to the renewable energy storage system 100 illustrated in FIG. 1. Even if the renewable energy storage system is configured as described above, the problems of the present invention can be solved.

The pressure adjusting device 20 can be connected through the fuel piping between the mist trapping unit 4 and the reactor 7. In the pressure adjusting device 20, a pressure of a hydrogen gas highly-purified by the mist trapping unit 4 is increased, and thereby an effect of further increasing reaction efficiency in which hydrogen is given to unsaturated hydrocarbon is obtained. In other words, the renewable energy can be stored without loss. Through the process, the renewable energy storage system 200 can be operated with high efficiency.

When the pressure adjusting device 20 is capable of supplying a gas obtained from the mist trapping unit 4 to the reactor 7 at a constant pressure, it is not particularly limited. For example, a method for sealing a hydrogen gas at a constant pressure, and the like are included. Further, as a method for controlling a pressure, for example, a hydrogen pressure control device of a pressure regulator or the like may be provided, and a known compressor may be used. The above hydrogen pressure control device is provided, and thereby a generated hydrogen pressure can be suitably controlled. From the viewpoint of the fact that the addition reaction efficiency can be improved and the reaction time can be shortened more, a pressure at the time of adding hydrogen is preferably a gauge pressure of 1 atmosphere or higher and 50 atmosphere or lower (that is, 0.1 MPa or higher and 5 MPa or lower).

As described above, also in the renewable energy storage system 200 according to the second embodiment, a system capable of storing renewable energy with high efficiency can be provided.

### [3. Third Embodiment]

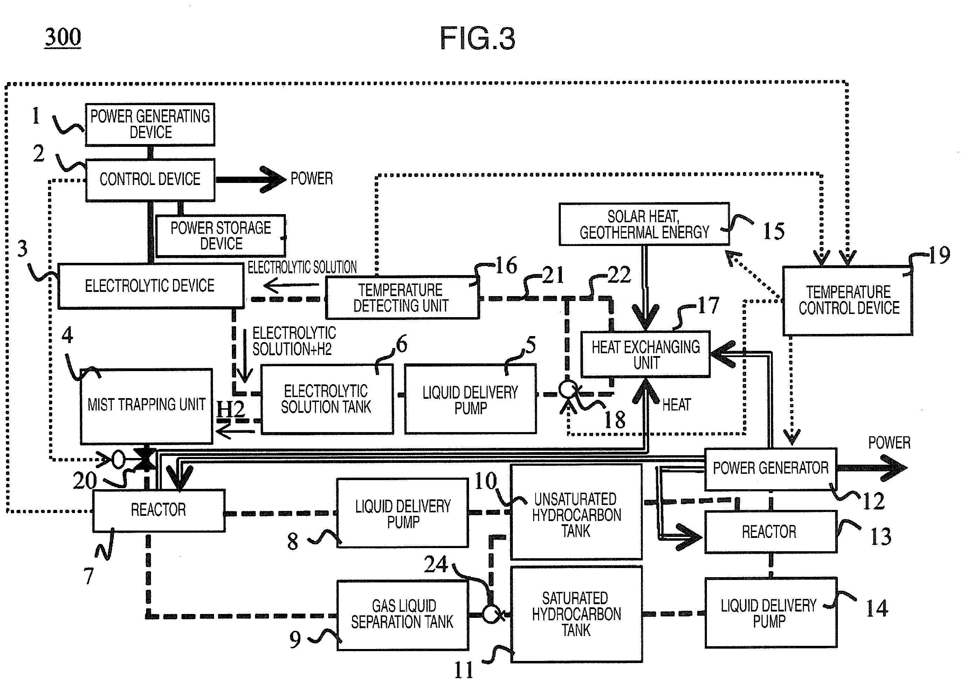

Next, a renewable energy storage system 300 according to a third embodiment will be described with reference to FIG. 3. In addition, a device to which the same reference numeral as that of FIG. 2 is given in FIG. 3 represents the same device, and detailed descriptions will be omitted.

The renewable energy storage system 300 illustrated in FIG. 3 is obtained by adding a power storage device to the renewable energy storage system 200 illustrated in FIG. 2. Even if the renewable energy storage system is configured as described above, the problems of the present invention can be solved.

The power storage device stores power generated by the power generating device 1. The power storage device can be connected electrically to the power generating device 1 and the electrolytic device 3, and the power stored in the power storage device can be supplied to the electrolytic device 3, if necessary. Further, the power storage device gives and receives the power in a system interconnection, and thereby performs power stabilization at the time when fluctuating power derived from the renewable energy flows reversely through the system.

A specific configuration of the power storage device is not particularly limited, and an arbitrary known storage battery (secondary battery) and a charge/discharge control system can be used. Note, however, that as the storage battery, a storage battery for cycle is preferable that is manufactured exclusively for repeated use in which discharge is performed from a full charged state and charge is performed again after constant discharge. Specifically, examples of the storage battery include a sodium-sulfur battery, a lead storage battery, and the like. Among the storage batteries, a lead storage battery is preferable that is excellent in an electrical performance, compact, and low-priced. Further, the storage battery may be configured by one storage battery, or by a storage battery group in which two or more storage batteries are arbitrarily connected. To the charge/discharge control system, a conventional charge/discharge control system such as a battery charger is applicable, which however not particularly limited thereto.

The above-described power storage device is collectively provided in a configuration of the renewable energy storage system. Thus, power from the power storage device may also be collectively used, or only power from the power storage device may be used without power from the power generating device 1. For example, since enough sunlight can be secured in a time zone of fine daytime, the power storage device is charged with a sufficient amount of power and further the reactor 7 is driven by surplus power. On the other hand, since solar power generation cannot be performed in a time zone of nighttime, the reactor 7 is operated by using power with which the power storage device is charged in the daytime. Through the process, the renewable energy can be used without loss.

As described above, also in the renewable energy storage system according to the third embodiment, a system capable of storing renewable energy with high efficiency can be provided.

### [4. Others]

On the basis of the renewable energy storage system 100, an apparatus configuration is additionally described sequentially. For example, to the renewable energy storage system 100, only the power storage device may be added, or only the pressure adjusting device 20 may be added. Further, the above is similarly applicable also to the other embodiments.

Further, the renewable energy storage system of the present invention may not necessarily be provided in a one-to-one relation with a renewable energy power generating device. That is, the above system may be integrated into a power distribution network such as a smart grid, and surplus power or fluctuating power in the grid is converted into saturated hydrocarbon, whereby high-efficiency utilization of the renewable energy can be provided.
It should be further understood by those skilled in the art that although the foregoing description has been made on embodiments of the invention, the invention is not limited thereto and various changes and modification may be made without departing from the scope of the appended claims.

### REFERENCE SIGNS LIST

- 1: Renewable energy power generating device
- 2: Control device
- 3: Electrolytic device
- 4: Mist trapping unit
- 5: Liquid delivery pump
- 6: Electrolytic solution tank
- 7: Reactor
- 8: Liquid delivery pump
- 9: Gas liquid separation tank
- 10: Unsaturated hydrocarbon tank
- 11: Saturated hydrocarbon tank
- 12: Power generator
- 13: Reactor
- 14: Liquid delivery pump
- 15: External heat source
- 16: Temperature detecting unit
- 17: Heat exchanging unit
- 18: Valve
- 19: Temperature control device
- 20: Pressure adjusting device
- 21: Electrolytic solution supply line
- 22: Heat exchanging line

## Claims

1. A renewable energy storage system for storing renewable energy, comprising:
a power generating device (1) that converts renewable energy into electric energy;
an electrolytic device (3) that produces a hydrogen gas by the electric energy obtained by the power generating device (1); a hydrogeneration device (7) that adds the hydrogen gas produced by the electrolytic device to unsaturated hydrocarbon to be converted into saturated hydrocarbon;
an unsaturated hydrocarbon tank (10) that stores the unsaturated hydrocarbon;
a saturated hydrocarbon tank (11) that stores the saturated hydrocarbon;
a heat exchanging unit (17) that supplies heat generated by the hydrogeneration device (7) to the electrolytic device (3); a gas liquid separation tank (9); a piping connecting the hydrogeneration device (7) and the saturated hydrocarbon tank (11) through the gas liquid separation tank (9); a piping connecting the unsaturated hydrocarbon tank (10) to a valve (24) provided on the piping between the gas liquid separation tank (9) and the saturated hydrocarbon tank (11); and
a control unit that controls the valve (24) provided on the piping between the gas liquid separation tank (9) and the saturated hydrocarbon tank (11) so as to connect the gas liquid separation tank (9) with the unsaturated hydrocarbon tank (10) when a temperature value of the hydrogeneration device (7) is lower than a predetermined value.

2. The renewable energy storage system according to claim 1, further comprising:
an electrolytic solution tank (6) that stores an electrolytic solution to be supplied to the device;
an electrolytic solution supply line that cyclically supplies the electrolytic solution stored in the electrolytic solution tank (6) to the electrolytic device (3); and
a temperature detecting unit (16) that detects a temperature of the electrolytic solution, wherein
the electrolytic solution supply line (21) includes a heat exchanging line (22) that is branched from the electrolytic solution supply line (21) and is returned to the electrolytic solution supply line (21) via the heat exchanging unit (17) and a valve (18) that adjusts a flow rate of the electrolytic solution flowing through the electrolytic solution supply line (21) and the heat exchanging line (22).

3. The renewable energy storage system according to claim 2, further comprising a control unit that controls the valve (18) adjusting the flow rate of the electrolytic solution on a basis of the temperature of the electrolytic solution detected by the temperature detecting unit (16) and adjusts the flow rate of the electrolytic solution flowing through the electrolytic solution supply line (21) and the heat exchanging line (22).

4. The renewable energy storage system according to claim 1, further comprising:
a dehydrogenating reactor (13) that separates the saturated hydrocarbon into hydrogen and unsaturated hydrocarbon by a dehydrogenating reaction of the saturated hydrocarbon; and
a power generator (12) that generates power by using the hydrogen generated by the dehydrogenating reactor (13) as a fuel.

5. The renewable energy system according to claim 4, wherein the dehydrogenating reactor (13) or the power generator (12) supplies surplus heat to the heat exchanging unit (17).

6. The renewable energy storage system according to claim 1, further comprising a pressure adjusting device (20) that adjusts a pressure of the hydrogen gas produced by the electrolytic device (3) and supplies the hydrogen gas to the hydrogeneration device (7).

7. The renewable energy storage system according to claim 1, further comprising a power storage device that stores power obtained by the power generating device (1).

## Patentansprüche

1. Speichersystem für erneuerbare Energie zum Speichern erneuerbarer Energie, das aufweist:
eine Energieerzeugungsvorrichtung (1), die erneuerbare Energie in elektrische Energie umwandelt;
eine Elektrolysevorrichtung (3), die mit Hilfe elektrischer Energie, die von der Energieerzeugungsvorrichtung (1) erhalten wird, Wasserstoffgas erzeugt;
eine Hydrierungsvorrichtung (7), die das mit Hilfe der Elektrolysevorrichtung erzeugte Wasserstoffgas an einen ungesättigten Kohlenwasserstoff addiert, der in einen gesättigten Kohlenwasserstoff umgewandelt werden soll;
einen Tank (10) für ungesättigten Kohlenwasserstoff, in dem der ungesättigte Kohlenwasserstoff gespeichert wird;
einen Tank (11) für gesättigten Kohlenwasserstoff, in dem der gesättigte Kohlenwasserstoff gespeichert wird;
eine Wärmetauschereinheit (17), die von der Hydrierungsvorrichtung (7) erzeugte Wärme an die Elektrolysevorrichtung (3) abgibt;
einen Gas-Flüssigkeit-Abtrenntank (9);
eine Leitung, die die Hydrierungsvorrichtung (7) über den Gas-Flüssigkeit-Abtrenntank (9) mit dem Tank (11) für gesättigten Kohlenwasserstoff verbindet;
eine Leitung, die den Tank (10) für ungesättigten Kohlenwasserstoff mit einem Ventil (24) verbindet, das an der Leitung zwischen dem Gas-Flüssigkeit-Abtrenntank (9) und dem Tank (11) für gesättigten Kohlenwasserstoff angeordnet ist; und
eine Steuereinheit, die das Ventil (24) steuert, das an der Leitung zwischen dem Gas-Flüssigkeit-Abtrenntank (9) und dem Tank (11) für gesättigten Kohlenwasserstoff so angeordnet ist, dass der Gas-Flüssigkeit-Abtrenntank (9) mit dem Tank (10) für ungesättigten Kohlenwasserstoff verbunden ist, wenn ein Temperaturwert der Hydrierungsvorrichtung (7) unterhalb eines vorgegebenen Wertes liegt.

2. Speichersystem für erneuerbare Energie nach Anspruch 1, das ferner aufweist:
einen Tank (6) für eine Elektrolyselösung, in dem eine Elektrolyselösung zur Versorgung der Vorrichtung aufgenommen ist;
eine Elektrolyselösungversorgungsleitung, die die Elektrolysevorrichtung (3) zyklisch mit der in dem Tank (6) für die Elektrolyselösung aufgenommenen Elektrolyselösung versorgt; und
eine Temperaturerfassungseinheit (16), die eine Temperatur der Elektrolyselösung erfasst, wobei
die Elektrolyselösungversorgungsleitung (21) eine Wärmetauscherleitung (22) aufweist, die von der Elektrolyselösungversorgungsleitung (21) abzweigt und zur Elektrolyselösungversorgungsleitung (21) über die Wärmetauschereinheit (17) und ein Ventil (18) zurückgeführt ist, das die Flussrate der durch die Elektrolyselösungversorgungsleitung (21) und die Wärmetauscherleitung (22) fließenden Elektrolyselösung einstellt.

3. Speichersystem für erneuerbare Energie nach Anspruch 2, das ferner eine Steuereinheit aufweist, die das Ventil (18) steuert, das die Flussrate der Elektrolyselösung auf Basis der mit Hilfe der Temperaturerfassungseinheit (16) erfassten Temperatur der Elektrolyselösung einstellt, und die Flussrate der durch die Elektrolyselösungversorgungsleitung (21) und die Wärmetauscherleitung (22) fließenden Elektrolyselösung einstellt.

4. Speichersystem für erneuerbare Energie nach Anspruch 1, das ferner aufweist:
einen Dehydrierungsreaktor (13), in dem der gesättigte Kohlenwasserstoff über eine Dehydrierungsreaktion des gesättigten Kohlenwasserstoffs in Wasserstoff und ungesättigten Kohlenwasserstoff aufgetrennt wird; und
einen Stromgenerator (12), der unter Verwendung des mit Hilfe des Dehydrierungsreaktors (13) erzeugten Wasserstoffs als Brennstoff Energie erzeugt.

5. Speichersystem für erneuerbare Energie nach Anspruch 4, wobei der Dehydrierungsreaktor (13) oder der Stromgenerator (12) überschüssige Energie an die Wärmetauschereinheit (17) abgeben.

6. Speichersystem für erneuerbare Energie nach Anspruch 1, das ferner eine Druckeinstellungsvorrichtung (20) aufweist, die einen Druck des von der Elektrolysevorrichtung (3) erzeugten Wasserstoffgases einstellt und das Wasserstoffgas der Hydrierungsvorrichtung (7) zuführt.

7. Speichersystem für erneuerbare Energie nach Anspruch 1, das ferner eine Energiespeichervorrichtung aufweist, in der von der Energieerzeugungsvorrichtung (1) erhaltene Energie gespeichert wird.

## Revendications

1. Système de stockage d'énergie renouvelable pour stocker une énergie renouvelable, comprenant :
un dispositif de génération d'électricité (1) qui convertit l'énergie renouvelable en énergie électrique ;
un dispositif électrolytique (3) qui produit un gaz hydrogène par l'énergie électrique obtenue par le dispositif de génération d'électricité (1) ;
un dispositif d'hydrogénération (7) qui ajoute le gaz hydrogène produit par le dispositif électrolytique à un hydrocarbure insaturé à convertir en hydrocarbure saturé ;
une cuve d'hydrocarbure insaturé (10) qui stocke l'hydrocarbure insaturé ;
une cuve d'hydrocarbure saturé (11) qui stocke l'hydrocarbure saturé ;
une unité d'échange de chaleur (17) qui fournit la chaleur générée par le dispositif d'hydrogénération (7) au dispositif électrolytique (3) ;
une cuve de séparation gaz-liquide (9) ;
une tuyauterie raccordant le dispositif d'hydrogénération (7) et la cuve d'hydrocarbure saturé (11) par l'intermédiaire de la cuve de séparation gaz-liquide (9) ;
une tuyauterie raccordant la cuve d'hydrocarbure insaturé (10) à une vanne (24) prévue sur la tuyauterie entre la cuve de séparation gaz-liquide (9) et la cuve d'hydrocarbure saturé (11) ; et
une unité de commande qui commande la vanne (24) prévue sur la tuyauterie entre la cuve de séparation gaz-liquide (9) et la cuve d'hydrocarbure saturé (11) de façon à raccorder la cuve de séparation gaz-liquide (9) à la cuve d'hydrocarbure insaturé (10) lorsqu'une valeur de température du dispositif d'hydrogénération (7) est inférieure à une valeur prédéterminée.

2. Système de stockage d'énergie renouvelable selon la revendication 1, comprenant en outre :
une cuve de solution électrolytique (6) qui stocke une solution électrolytique à fournir au dispositif ;
une conduite d'alimentation en solution électrolytique qui fournit cycliquement la solution électrolytique stockée dans la cuve de solution électrolytique (6) au dispositif électrolytique (3) ; et
une unité de détection de température (16) qui détecte une température de la solution électrolytique, dans lequel la conduite d'alimentation en solution électrolytique (21) comporte une conduite d'échange de chaleur (22) qui est bifurquée de la conduite d'alimentation en solution électrolytique (21) et est renvoyée à la conduite d'alimentation en solution électrolytique (21) via l'unité d'échange de chaleur (17) et une vanne (18) qui règle un débit de la solution électrolytique s'écoulant à travers la conduite d'alimentation en solution électrolytique (21) et la conduite d'échange de chaleur (22).

3. Système de stockage d'énergie renouvelable selon la revendication 2, comprenant en outre une unité de commande qui commande la vanne (18) réglant le débit de la solution électrolytique sur une base de la température de la solution électrolytique détectée par l'unité de détection de température (16) et règle le débit de la solution électrolytique s'écoulant à travers la conduite d'alimentation en solution électrolytique (21) et la conduite d'échange de chaleur (22).

4. Système de stockage d'énergie renouvelable selon la revendication 1, comprenant en outre :
un réacteur de déshydrogénation (13) qui sépare l'hydrocarbure saturé en hydrogène et en hydrocarbure insaturé par une réaction de déshydrogénation de l'hydrocarbure saturé ; et
un générateur d'électricité (12) qui génère de l'électricité en utilisant l'hydrogène généré par le réacteur de déshydrogénation (13) en tant que combustible.

5. Système d'énergie renouvelable selon la revendication 4, dans lequel le réacteur de déshydrogénation (13) ou le générateur d'électricité (12) fournit un surplus de chaleur à l'unité d'échange de chaleur (17).

6. Système de stockage d'énergie renouvelable selon la revendication 1, comprenant en outre un dispositif de réglage de pression (20) qui règle une pression du gaz hydrogène produit par le dispositif électrolytique (3) et fournit le gaz hydrogène au dispositif d'hydrogénération (7).

7. Système de stockage d'énergie renouvelable selon la revendication 1, comprenant en outre un dispositif de stockage d'électricité qui stocke l'électricité obtenue par le dispositif de génération d'électricité (1).
